# EUROPÄISCHE PATENTSCHRIFT

(11) **EP 2 367 727 B1**
(45) Veröffentlichungstag und Bekanntmachung des Hinweises auf die Patenterteilung: **29.03.2017**
(21) Anmeldenummer: 09759919.5
(22) Anmeldetag: 11.11.2009
(51) Int. Cl.: B65D 5/54, B65D 5/48, B65D 5/66, B65D 5/50

(54) **FALTSCHACHTEL**
FOLDING BOX
BOÎTE PLIANTE

(30) Priorität: 21.11.2008 DE 202008015493 U
(43) Veröffentlichungstag der Anmeldung: 28.09.2011
(73) Patentinhaber: Boehringer Ingelheim Pharma GmbH & Co. KG, 55216 Ingelheim am Rhein (DE)
(72) Erfinder: SCHULD, Reinhard, 55216 Ingelheim am Rhein (DE)
(74) Vertreter: Simon, Elke Anna Maria
(86) Internationale Anmeldenummer: PCT/EP2009/064969
(87) Internationale Veröffentlichungsnummer: WO 2010/057812

(56) Entgegenhaltungen:
- EP-A2- 1 826 129
- WO-A1-95/23740
- DE-A1- 19 741 481
- DE-U1- 9 421 160
- GB-A- 2 276 611
- JP-U- H0 416 123
- JP-U- H04 121 221
- US-A- 4 134 495

## Beschreibung

Die Erfindung bezieht sich auf eine Faltschachtel aus einem einstückigen Kartonzuschnitt mit einem integral ausgebildeten, einen oberen Endbereich eines quaderförmigen Rumpfes an drei Seiten übergreifenden Klappdeckel, der mit einer Rückwand des Rumpfes über eine Faltlinie verbunden ist und im geschlossenen Zustand bündig auf einer Vorderwand sowie zwei Seitenwänden aufliegt, und mit einer Vorderwange sowie zwei Seitenwangen, die einen in den Klappdeckel hineinragenden Kragen bilden.

Die DE 20 2004 000 479 U1 offenbart eine Faltschachtel aus Karton mit einem integral ausgebildeten, einen oberen Endbereich des Faltschachtelrumpfes an drei Seiten übergreifenden Klappdeckel, der mit einem der Rumpffelder in einer eine Oberkante der Faltschachtel bildenden Faltlinie verbunden ist und drei zusammenhängende Wangen hat, die von einem Deckelfeld des Klappdeckels senkrecht wegstehen und jeweils doppelwandig ausgebildet sind, wobei der Klappdeckel ein am freien Rand des jeweiligen Wangenfeldes nach innen umgeschlagenes Laschenfeld enthält, das mit der Innenseite des Wangenfeldes verklebt ist und bis in die Kehle zwischen dem Wangenfeld und dem Deckelfeld reicht und in der Kehle mit dem oberen Rand des von diesem Wangenfeld teilweise überdeckten Rumpffeldes im unangebrochenen Zustand der Faltschachtel integral in einer beim erstmaligen Öffnen des Klappdeckels aufbrechbaren Faltlinie verbunden ist.

Im Weiteren zeigt die DE 91 14 927 U1 eine Faltschachtel mit Klappdeckel aus einem Kartonzuschnitt mit die Quaderform und den Klappdeckel bestimmenden Falzen und Schnitten. Auf der dem Falzscharnier des Klappdeckels gegenüberliegenden Schachtelvorderseite und an den angrenzenden Schachtelschmalseiten ist ein durch Perforationen gebildetes Aufreißband in dem Kartonzuschnitt vorgesehen, das an einer Schachtelschmalseite zur Bildung eines Aufreißgriffes verbreitert ist.

Die bekannten Faltschachteln sind insofern nachteilig, als sie nicht mehrere Fächer für darin unterzubringende Gegenstände aufweisen, was insbesondere in Bereich von Faltschachteln zur Verpackung von Arzneimitteln problematisch ist, die neben dem eigentlichen Produkt, also dem Arzneimittel, mindestens einen so genannten Beipackzettel aufweisen müssen. In der Regel ist dieser Beipackzettel gemeinsam mit dem Produkt im Rumpf der Faltschachtel untergebracht. Aufgrund nationaler Vorschriften kann es erforderlich sein, zwei Beipackzettel in einer Faltschachtel unterzubringen, wobei der eine Beipackzettel für den Benutzer des Produktes und der andere Beipackzettel für einen das Produkt aushändigenden Arzt oder Apotheker bestimmt ist. Sind beide Beipackzettel gemeinsam mit dem Produkt in dem Rumpf der Faltschachtel verstaut, muss der Arzt oder Apotheker den für ihn bestimmten Beipackzettel suchen, was unpraktisch und zeitaufwändig ist.

Die JP H04 121 221 U offenbart eine Faltschachtel aus einem einstückigen Kartonzuschnitt mit einem integral ausgebildeten, einen oberen Endbereich eines quaderförmigen Rumpfes an drei Seiten übergreifenden Klappdeckel, der mit einer Rückwand des Rumpfes über eine Faltlinie verbunden ist, und mit einer Vorderwange sowie zwei Seitenwangen, die einen in den Klappdeckel hineinragenden Kragen bilden, wobei der Rumpf in zwei Aufnahmefächer geteilt ist und der Kartonzuschnitt in einem Bereich der einen Seitenwange und einem Teil der Vorderwange des Kragens derart getrennt ist, dass der Rumpf durch eine sich von der Vorderwange zur Rückwand erstreckenden Trennwand in die beiden Aufnahmefächer unterteilt ist.

Es ist Aufgabe der Erfindung, eine Faltschachtel der eingangs genannten Art zu schaffen, die ein geordnetes Verstauen mehrerer unterschiedlicher Gegenstände ermöglicht.

Erfindungsgemäß wird die Aufgabe durch die Merkmale des Anspruchs 1 gelöst.

Aufgrund dieser Maßnahme können unterschiedliche Gegenstände separiert voneinander in dem Hauptfach und dem Vorderfach untergebracht werden. Die Gegenstände können beispielsweise für verschiedene Benutzergruppen, an die sich die Faltschachtel mit ihrem Inhalt richtet, gedacht sein. Beispielsweise findet ein Patient in dem Hauptfach ein Medikament und einen an ihn gerichteten Beipackzettel und ein die Faltschachtel an den Patienten aushändigender Apotheker oder Arzt in dem Vorderfach den für ihn bestimmten Beipackzettel, den er ohne umständliches Suchen einfach der Faltschachtel entnehmen kann. In diesem Zusammenhang ist es auch möglich, beispielsweise das Hauptfach mit einem Siegel zu versehen, um zu dokumentieren, dass es noch nicht geöffnet wurde. Demnach kann insbesondere der Apotheker die Faltschachtel öffnen, um an den entsprechenden Beipackzettel zu gelangen, wobei das Hauptfach versiegelt bleibt, so dass der endgültige Benutzer erkennen kann, dass das Medikament nicht manipuliert und vollständig vorhanden ist.

In Ausgestaltung geht die Vorderwand unter zwei unmittelbar nebeneinander liegenden, längsseitigen Faltlinien in eine der Seitenwände über. Die beiden Faltlinien, von denen die eine Faltlinie eine Längkante bildet, bewirken eine Art Ziehharmonika-Effekt. Bei einer beispielsweise auf die Vorderwand einwirkenden Druckbelastung, die beim Stapeln mehrerer Faltschachteln herrschen kann, erfolgt eine deformierende Verformung im Bereich der beiden Faltlinien und die Faltschachtel wirkt auch optisch auf den Benutzer unbeschädigt.

Zur Erleichterung der Handhabbarkeit und der Entnahme der in der Faltschachtel verstauten Gegenstände weisen zweckmäßigerweise die Vorderwand und/oder die Vorderwange einen Einschnitt als Eingriff auf.

Zwecks Erzielung einer weiteren Separierung der unterschiedlichen in der Faltschachtel unterzubringenden Gegenstände ist erfindungsgemäß das Hauptfach in zwei, insbesondere unterschiedlich große, Aufnahmefächer geteilt. In den Aufnahmekammern können beispielsweise unterschiedliche zu kombinierende Präparate oder eine Wirkstoffformulierung mit einer zugehörigen Applikationseinrichtung gelagert sein.

Zur einstückigen Herstellung der Faltschachtel ist erfindungsgemäß der Kartonzuschnitt in einem Bereich der einen Seitenwange und einem Teil der Vorderwange des Kragens derart getrennt, dass das Hauptfach des Rumpfes durch eine sich von der Vorderwange zur Rückwand erstreckenden Trennwand in die beiden Aufnahmefächer unterteilt ist.

Um eine leichte Erreichbarkeit eines verhältnismäßig kleinen Gegenstandes sicherzustellen, ist erfindungsgemäß in eines der Aufnahmefächer ein Zwischenboden eingesetzt.

Erfingdungsgemäß weist der Kartonzuschnitt zur Bildung des Zwischenbodens eine sich von der Unterseite der über eine Faltlinie an der Rückwand angelenkten Seitenwange erstreckende Zunge auf. Zweckmäßigerweise erstreckt sich die Zunge in einem ersten Abschnitt von der Seitenwange weg, verläuft in einem zweiten Abschnitt in Richtung der freien Oberkante der Seitenwange und ist in einem dritten Abschnitt zu der Seitenwange geführt, wobei der dritte Abschnitt in einen vierten, parallel zu der Seitenwange verlaufenden und mit dieser verklebten Abschnitt mündet. In dieser Ausgestaltung bildet der erste Abschnitt einen Bestandteil eines Bodens der Faltschachtel und der dritte Abschnitt der Zunge den Zwischenboden.

Bevorzugt ist in das Vorderfach und/oder das eine Aufnahmefach des Hauptfachs eine Informationsbroschüre, insbesondere ein Beipackzettel, entnehmbar eingesetzt. Damit die Informationsbroschüre nicht einfach verloren geht, ist vorteilhafterweise die Informationsbroschüre lösbar in dem Vorderfach befestigt.

Um eine einfache Handhabung der Informationsbroschüre zu erreichen, ist in Ausgestaltung die Informationsbroschüre in eine Banderole eingeschoben, die an der Innenseite der Vorderwand oder der Außenseite der Vorderwange des Kragens, insbesondere bereits im Kartonzuschnitt, angeklebt ist. Demnach ist der Kartonzuschnitt gemeinsam mit der Informationsbroschüre bereits während der Fertigung der Faltschachtel handhabbar. Die Informationsbroschüre kann aus der Banderole herausgezogen und wieder in diese eingesetzt werden, wobei die Banderole eine zuverlässige Halterung der Informationsbroschüre in dem Vorderfach der Faltschachtel bewirkt.

Zweckmäßigerweise ist in das eine Aufnahmefach des Hauptfachs eine Applikationsvorrichtung, insbesondere ein Inhalator, für eine medizinische Wirkstoffformulierung und in das andere Aufnahmefach mindestens eine Verpackung, insbesondere eine Kartusche, mit der zu applizierenden Wirkstoffformulierung eingesetzt.

Inhalatoren sind unter den Markennamen HandiHaler^{®}, Spinhaler^{®}, Rotahaler^{®}, Aerolizer^{®}, Flowcaps^{®}, Turbospin^{®}, AIR DPI^{®}, Orbital^{®}, Directhaler^{®} bekannt und/oder in DE 33 45 722, EP 0 591 136, DE 43 18 455, WO 91/02558, FR-A-2 146 202, US-A-4 069 819, EP 666085, EP 869079, US 3,991,761, WO 99/45987, WO 200051672, Bell, J. Pharm. Sci. 60, 1559 (1971); Cox, Brit. Med. J. 2, 634 (1969), beschrieben. Als Pulverinhalatoren sind Einfach- oder Mehrfachdosis-Pulverinhalatoren, insbesondere der Spinhaler^{®}, Rotahaler^{®}, Aerolizer^{®}, Inhalator^{®}, HandiHaler^{®}, Diskhaler^{®}, Diskus^{®}, Accuhaler^{®}, Aerohaler^{®}, Eclipse^{®}, Turbohaler^{®}, Turbuhaler^{®}, Easyhaler^{®}, Novolizer^{®}, Clickhaler^{®}, Pulvinal^{®}, Novolizer^{®}, SkyeHaler^{®}, Xcelovair^{®}, Pulvina^{®}, Taifun^{®}, MAGhaler^{®}, Twisthaler^{®} und der Jethaler^{®} bekannt.

Im Weiteren wird der Zerstäuber "Respimat^{®}" von der Boehringer Ingelheim KG in Form eines Inhalators angeboten und ist in der WO 91/14468 A1 sowie der WO 97/12687 A1 dargestellt. Mit diesem Aerosolzerstäuber wird eine flüssige pharmazeutische Wirkstoffzubereitung aus einem in den Aerosolzerstäuber eingesetzten starren Behälter, also einer Kartusche, mit einem Innenbeutel mittels einer durch ein Schraubgetriebe angetriebenem Kolbenpumpe aus dem Innenbeutel gefördert und mittels eines federgetriebenen Druckerzeugers durch eine mikrostrukturierte Zerstäuberdüse zu einem so genannten "soft mist" verarbeitet und ausgesprüht.

Besonders bevorzugt sind in diesem Zusammenhang Arzneimittel, die ausgewählt sind aus der Gruppe bestehend aus Anticholinergika, Betamimetika, Steroiden, Phosphodiesterase IV-inhibitoren, LTD4-Antagonisten und EGFR-Kinase-Hemmer, Antiallergika, Derivate von Mutterkornalkaloiden, Triptane, CGRP-Antagonisten, Phosphodiesterase-V-Inhibitoren, sowie Kombinationen aus solchen Wirkstoffen, z.B. Betamimetika plus Anticholinergika oder Betamimetica plus Antiallergika. Im Fall von Kombinationen weist wenigstens einer der Wirkstoffe chemisch gebundenes Wasser auf. Bevorzugt werden anticholinergikahaltige Wirkstoffe eingesetzt, als Monopräparate oder in Form von Kombinationspräparaten.

Bevorzugt sind in diesem Zusammenhang Arzneimittel, die ausgewählt sind aus der Gruppe bestehend aus Anticholinergika, Betamimetika, Steroiden, Phosphodiesterase IV-inhibitoren, LTD4-Antagonisten und EGFR-Kinase-Hemmer, Antiallergika, Derivate von Mutterkornalkaloiden, Triptane, CGRP-Antagonisten, Phosphodiesterase-V-Inhibitoren, sowie Kombinationen aus solchen Wirkstoffen, z.B. Betamimetika plus Anticholinergika oder Betamimetica plus Antiallergika. Im Fall von Kombinationen weist wenigstens einer der Wirkstoffe vorzugsweise chemisch gebundenes Wasser auf. Bevorzugt werden anticholinergikahaltige Wirkstoffe eingesetzt, als Monopräparate oder in Form von Kombinationspräparaten.

Um die Unberührtheit der in der Faltschachtel gelagerten Gegenstände optisch erfassbar zu machen, ist zweckmäßigerweise der Klappdeckel in einer beim erstmaligen Öffnen des Klappdeckels aufbrechbaren Faltlinie mit den Seitenwänden und der Vorderwand verbunden.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigt:

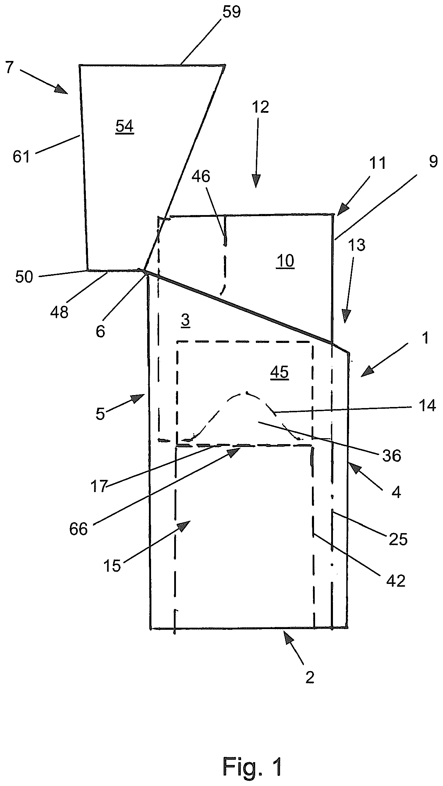

- Fig.1: eine Seitenansicht einer erfindungsgemäßen Faltschachtel mit geöffnetem Klappdeckel,

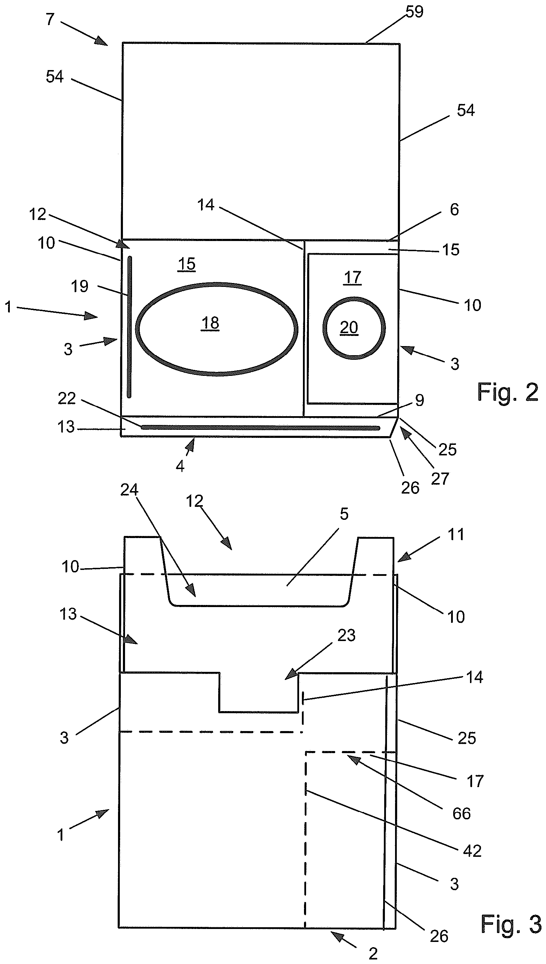

- Fig.2: eine Draufsicht auf die Faltschachtel nach Fig. 1 mit komplett geöffnetem Klappdeckel,
- Fig.3: eine Vorderansicht der Faltschachtel nach Fig. 2 und

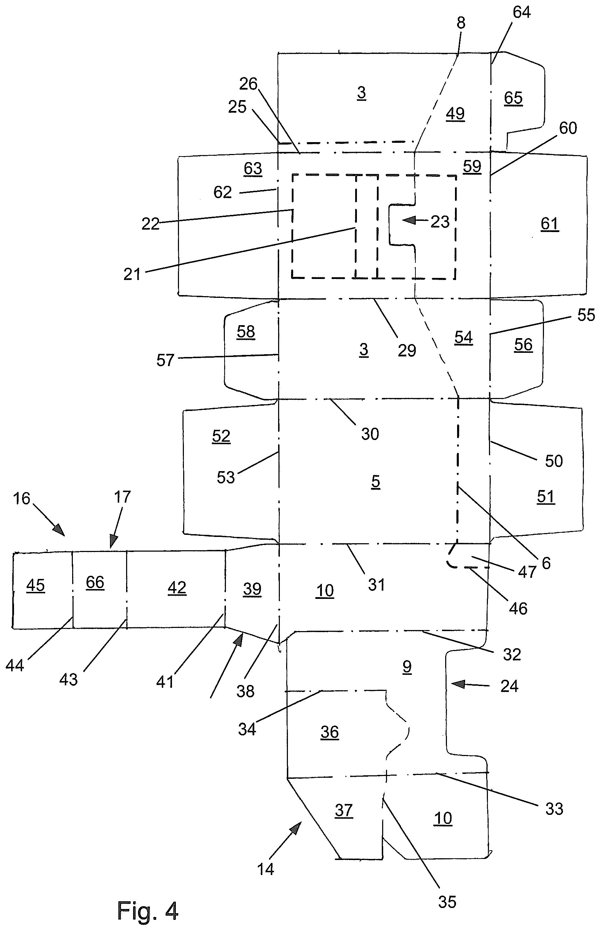

- Fig.4: einen Kartonzuschnitt der Faltschachtel nach Fig. 1.

Die Faltschachtel weist einen quaderförmigen Rumpf 1 mit einem Boden 2 , zwei gegenüberliegenden Seitenwänden 3 einer rechtwinklig dazu angeordneten Vorderwand 4 und einer parallel dazu verlaufenden Rückwand 5 auf, die über eine Faltlinie 6 mit einem Klappdeckel 7 verbunden ist, der im geschlossenen Zustand bündig auf der Vorderwand 4 und den beiden Seitenwänden 3 aufliegt und in einer beim erstmaligen Öffnen des Klappdeckels 7 aufbrechbaren Faltlinie gemäß der gestrichelten Line 8 mit den Seitenwänden 3 und der Vorderwand 4 verbunden ist. In den Klappdeckel 7 ragt im geschlossenen Zustand der Faltschachtel ein aus einer Vorderwange 9 sowie zwei gegenüberliegenden Seitenwangen 10 zusammengesetzter Kragen 11. Die Rückwand 5 ist gegenüber der Vorderwand 4 höher bemessen und die Seitenwände 3 erstrecken sich ausgehend von der Vorderwand 4 schräg nach oben verlaufend zur Rückwand 5.

Die Vorderwange 9 ist parallel und beabstandet zu der Vorderwand 4 angeordnet und unterteilt den Rumpf 1 in ein Hauptfach 12 und ein Vorderfach 13, wobei das Hauptfach 12 durch eine Trennwand 14 in zwei unterschiedlich große Aufnahmefächer 15 geteilt ist und das eine Aufnahmefach 15 einen durch eine Zunge 16 gebildeten Zwischenboden 17 aufweist.

Das eine Aufnahmefach 15 des Hauptfachs 12 lagert einen Inhalator 18 für eine medizinische Wirkstoffformulierung sowie einen für einen Benutzer bestimmten Beipackzettel 19. Auf dem Zwischenboden 17 des anderen Aufnahmefachs 15 steht eine Kartusche 20 mit der mit dem Inhalator zu applizierenden Wirkstoffformulierung auf. In dem Vorderfach 13 ist ein durch eine Banderole 21 zusammengehaltener zweiter Beipackzettel 22 aufgenommen, wobei die Banderole 21 an der Innenseite der Vorderwand 4 durch Kleben befestigt ist.

Zum Öffnen der Faltschachtel hintergreift der Benutzer den Einschnitt 23 in der Vorderwand 4 und öffnet den Klappdeckel 7 durch Aufreißen der aufbrechbaren Faltlinie gemäß der gestrichelten Linie 8, die eine Perforation darstellt, von den Seitenwänden 3 und der Vorderwand 4. Der Beipackzettel 22 ist aufgrund des Einschnittes 23 in der Vorderwand 4 und eines Einschnittes 24 in der Vorderwange 9 leicht aus der Banderole 21 und dem Vorderfach 13 herauszuziehen und der Faltschachtel zu entnehmen.

Um eine deformierende Verformung der Faltschachtel, insbesondere in Bereich der Vorderwand 4, zu vermeiden, geht die Vorderwand 4 unter zwei unmittelbar nebeneinander liegenden, längsseitigen Faltlinien 25, 26 in die benachbarte Seitenwand 3 über. Die beiden Faltlinien 25, 26, von denen die eine Faltlinie 25 eine Längskante 27 des Rumpfes 1 bildet, bewirken eine Art Ziehharmonika-Effekt.

Zur Fertigung der Faltschachtel ist ein einstückiger Kartonzuschnitt 28 vorgesehen, bei dem randseitig die erste Seitenwand 3 unter Ausbildung der beiden Faltlinien 25, 26 in die Vorderwand 4 übergeht, an die sich unter Zwischenanordnung einer Faltlinie 29 die zweite Seitenwand 3 anschließt, die wiederum über eine Faltlinie 30 mit der Rückwand 5 verbunden ist. Die Rückwand 5 steht über eine Faltlinie 31 mit der ersten Seitenwange 10 des Kragens 11 in Verbindung, die unter Ausbildung einer Faltlinie 32 mit der Vorderwange 9 gekoppelt ist, wobei die Vorderwange 9 unter Zwischenanordnung einer Faltlinie 33 mit der zweiten Seitenwange 10 des Kragens 11 verbunden ist. Die zweite Seitenwange 10 des Kragens 11 und ein bis zu einer Faltlinie 34 ragender Bereich der Vorderwange 9 ist durch eine Schnittlinie 35 getrennt und bildet die Trennwand 14, deren erster Trennwandabschnitt 36 von der Vorderwange 9 in Richtung der Rückwand 5 verläuft und das Hauptfach 12 in die beiden Aufnahmefächer 15 unterteilt und deren zweiter Trennwandabschnitt 37 mit der Rückwand verklebt ist.

Von der an die Rückwand 5 angrenzenden ersten Seitenwange 10 geht unter Einschluss einer Faltlinie 38 bodenseitig die Zunge 16 ab, deren erster Abschnitt 39 eine innere Bodenlasche 40 bildet und über eine Faltlinie 41 in einen sich in Richtung des Klappdeckels 7, parallel zur Trennwand 14 verlaufenden zweiten Abschnitt 42 übergeht, der über eine Faltlinie 43 in einen dritten Abschnitt 66, nämlich den Zwischenboden 17, mündet, von dem unter Zwischenanordnung einer Faltlinie 44 ein mit der ersten Seitenwange 10 oberhalb des Zwischenbodens 17 verklebter vierter Zungenabschnitt 45 abgeht. In dem der Zunge 16 gegenüberliegenden Bereich der ersten Seitenwange 10 ist eine Schnittlinie 46 zur Bildung einer Deckellasche 47 vorgesehen, die Bestandteil einer Deckelrückwand 48 ist und mit einer Deckelseitenwand 49 verklebt wird.

Die Deckelrückwand 48 ist über die Faltlinie 6 mit der Rückwand 5 und über eine Faltlinie 50 mit einer inneren Deckellasche 51 verbunden. Im Weiteren ist eine innere Bodenlasche 52 durch eine Faltlinie 53 mit der Rückwand 5 gekoppelt.

Oberhalb der Linie 8 schließt sich an die zweite Seitenwand 3 eine Deckelseitenwand 54 an, die über eine Faltlinie 55 mit einer inneren Deckellasche 56 verbunden ist. Im unteren Bereich ist unter Ausbildung einer Faltlinie 57 eine innere Bodenlasche 58 vorgesehen.

An der Vorderwand 3 ist im Kartonzuschnitt 29 oberhalb der Linie 8 eine Deckelvorderwand 59 vorgesehen, die über eine Faltlinie 60 mit einer äußeren Deckellasche 61 verbunden ist. Auf der gegenüberliegenden Seite geht unter Zwischenanordnung einer Faltlinie 62 eine äußere Bodenlasche 63 ab.

Die erste Seitenwand 3 ist im Kartonzuschnitt 29 oberhalb der Linie 8 der Deckelseitenwand 49 benachbart, die über eine Faltlinie 64 mit einer inneren Deckellasche 65 verbunden ist.

Im gefalteten Zustand sind die Deckellaschen 47, 51, 56, 61, 65 und die Bodenlaschen 40, 52, 58, 63 jeweils miteinander verklebt. Im Weiteren ist die im Kartonzuschnitt 29 äußere zweite Seitenwange 10 mit der inneren zweiten Seitenwand 3 und die im Kartonzuschnitt 29 äußere erste Seitenwand 3 mit der der inneren ersten Seitenwange 10 verklebt.

**Bezugszeichenliste**

| | | | |
|---|---|---|---|
| 1. | Rumpf | 34. | Faltlinie |
| 2. | Boden | 35. | Schnittlinie |
| 3. | Seitenwand | 36. | Trennwandabschnitt |
| 4. | Vorderwand | 37. | Trennwandabschnitt |
| 5. | Rückwand | 38. | Faltlinie |
| 6. | Faltlinie | 39. | Abschnitt |
| 7. | Klappdeckel | 40. | Bodenlasche |
| 8. | gestrichelte Line | 41. | Faltlinie |
| 9. | Vorderwange | 42. | Abschnitt |
| 10. | Seitenwange | 43. | Faltlinie |
| 11. | Kragen | 44. | Faltlinie |
| 12. | Hauptfach | 45. | Abschnitt |
| 13. | Vorderfach | 46. | Schnittlinie |
| 14. | Trennwand | 47. | Deckellasche |
| 15. | Aufnahmefach | 48. | Deckelrückwand |
| 16. | Zunge | 49. | Deckelseitenwand |
| 17. | Zwischenboden | 50. | Faltlinie |
| 18. | Inhalator | 51. | Deckellasche |
| 19. | Beipackzettel | 52. | Bodenlasche |
| 20. | Kartusche | 53. | Faltlinie |
| 21. | Banderole | 54. | Deckelseitenwand |
| 22. | Beipackzettel | 55. | Faltlinie |
| 23. | Einschnitt | 56. | Deckellasche |
| 24. | Einschnitt | 57. | Faltlinie |
| 25. | Faltlinie | 58. | Bodenlasche |
| 26. | Faltlinie | 59. | Deckelvorderwand |
| 27. | Längskante | 60. | Faltlinie |
| 28. | Kartonzuschnitt | 61. | Deckellasche |
| 29. | Faltlinie | 62. | Faltlinie |
| 30. | Faltlinie | 63. | Bodenlasche |
| 31. | Faltlinie | 64. | Faltlinie |
| 32. | Faltlinie | 65. | Deckellasche |
| 33. | Faltlinie | 66. | Abschnitt |

## Patentansprüche

1. Faltschachtel aus einem einstückigen Kartonzuschnitt (28) mit einem integral ausgebildeten, einen oberen Endbereich eines quaderförmigen Rumpfes (1) an drei Seiten übergreifenden Klappdeckel (7), der mit einer Rückwand (5) des Rumpfes (1) über eine Faltlinie (6) verbunden ist und im geschlossenen Zustand bündig auf einer Vorderwand (4) sowie zwei Seitenwänden (3) aufliegt, und mit einer Vorderwange (9) sowie zwei Seitenwangen (10), die einen in den Klappdeckel (7) hineinragenden Kragen (11) bilden, wobei die Vorderwange (9) parallel und beabstandet zu der Vorderwand (4) angeordnet ist und den Rumpf (1) in ein Hauptfach (12) und ein Vorderfach (13) unterteilt, wobei das Hauptfach (12) in zwei, insbesondere unterschiedlich große, Aufnahmefächer (15) geteilt ist und der Kartonzuschnitt (28) in einem Bereich der einen Seitenwange (10) und einem Teil der Vorderwange (9) des Kragens (11) derart getrennt ist, dass das Hauptfach (12) des Rumpfes (1) durch eine sich von der Vorderwange (9) zur Rückwand (5) erstreckenden Trennwand (14) in die beiden Aufnahmefächer (15) unterteilt ist und in eines der Aufnahmefächer (15) ein Zwischenboden (17) eingesetzt ist, wobei der Kartonzuschnitt (28) zur Bildung des Zwischenbodens (17) eine sich von der Unterseite der über eine Faltlinie (31) an der Rückwand (5) angelenkten Seitenwange (10) erstreckende Zunge (16) aufweiset.

2. Faltschachtel nach Anspruch 1, **dadurch gekennzeichnet, dass** sich die Zunge (16) in einem ersten Abschnitt (39) von der Seitenwange (10) weg erstreckt, in einem zweiten Abschnitt (42) in Richtung der freien Oberkante der Seitenwange verläuft, und in einem dritten Abschnitt (66) zu der Seitenwange geführt ist, wobei der dritte Abschnitt (66) in einen vierten, parallel zu der Seitenwange (10) verlaufenden und mit dieser verklebten Abschnitt (44) mündet.

3. Faltschachtel nach Anspruch 1, **dadurch gekennzeichnet, dass** in das Vorderfach (13) und/oder das eine Aufnahmefach (15) des Hauptfachs (12) eine Informationsbroschüre, insbesondere ein Beipackzettel (19, 22), entnehmbar eingesetzt ist.

4. Faltschachtel nach Anspruch 3, **dadurch gekennzeichnet, dass** die Informationsbroschüre lösbar in dem Vorderfach (13) befestigt ist.

5. Faltschachtel nach Anspruch 4, **dadurch gekennzeichnet, dass** die Informationsbroschüre in eine Banderole (21) eingeschoben ist, die an der Innenseite der Vorderwand (4) oder der Außenseite der Vorderwange (9) des Kragens (11), insbesondere bereits im Kartonzuschnitt (28), angeklebt ist.

6. Faltschachtel nach Anspruch 1 **dadurch gekennzeichnet, dass** in das eine Aufnahmefach (15) des Hauptfachs (12) eine Applikationsvorrichtung, insbesondere ein Inhalator (18), für eine medizinische Wirkstoffformulierung und in das andere Aufnahmefach (15) mindestens eine Verpackung, insbesondere eine Kartusche (20), mit der zu applizierenden Wirkstoffformulierung eingesetzt ist.

7. Faltschachtel nach Anspruch 1, **dadurch gekennzeichnet, dass** der Klappdeckel (7) in einer beim erstmaligen Öffnen des Klappdeckels (7) aufbrechbaren Faltlinie mit den Seitenwänden (3) und der Vorderwand (4) verbunden ist.

## Claims

1. Folding box made from a one-piece cardboard blank (28) comprising an integrally formed hinged lid (7) that overlaps an upper end area of a rectangular-cuboid-shaped body (1) on three sides, is connected to a rear wall (5) of the body (1) through a fold line (6), and lies flush on a front wall (4) and two side walls (3) in the closed state, and having a front panel (9) and two side panels (10) that form a collar (11) that protrudes into the hinged lid (7), wherein the front panel (9) is arranged parallel to and spaced from the front wall (4) and divides the body (1) into a main compartment (12) and a front compartment (13), wherein the main compartment (12) is divided into two receiving compartments (15), particularly of different sizes, and the cardboard blank (28) is severed in a region of one side panel (10) and part of the front panel (9) of the collar (11) such that the main compartment (12) of the body (1) is subdivided into the two receiving compartments (15) by a boundary wall (14) extending from the front panel (9) to the rear wall (5), and an intermediate base (17) is inserted in one of the receiving compartments (15), wherein the cardboard blank (28) comprises, for forming the intermediate base (17), a tongue (16) extending from the underside of the side panel (10) hinged to the rear wall (5) via a fold line (31).

2. Folding box according to claim 1, **characterised in that** the tongue (16) in a first portion (39) extends away from the side panel (10), in a second portion (42) extends in the direction of the free upper edge of the side panel, and in a third portion (66) is guided to the side panel, the third portion (66) terminating in a fourth portion (44) extending parallel to the side panel (10) and glued thereto.

3. Folding box according to claim 1, **characterised in that** an information leaflet, particularly a package leaflet (19, 22) is removably inserted in the front compartment (13) and/or one of the receiving compartments (15) of the main compartment (12).

4. Folding box according to claim 3, **characterised in that** the information leaflet is removably secured in the front compartment (13).

5. Folding box according to claim 4, **characterised in that** the information leaflet is inserted in a sleeve (21) which is glued to the inside of the front wall (4) or the outside of the front panel (9) of the collar (11), particularly in the cardboard blank (28) itself.

6. Folding box according to claim 1, **characterised in that** an applicator device, particularly an inhaler (18), for a medical active substance formulation is inserted in one receiving compartment (15) of the main compartment (12) and at least one package, particularly a cartridge (20), containing the active substance formulation that is to be administered is inserted in the other receiving compartment (15).

7. Folding box according to claim 1, **characterised in that** the hinged lid (7) is connected to the side walls (3) and the front wall (4) along a fold line that can be broken open when the hinged lid (7) is opened for the first time.

## Revendications

1. Boîte pliante composée d'une pièce découpée en carton (28) d'un seul tenant avec un couvercle rabattable (7) formé d'une seule pièce recouvrant une partie terminale supérieure d'une coque (1) parallélépipédique sur trois côtés, qui est relié à un panneau arrière (5) de la coque (1) par une ligne de pliage (6) et à l'état fermé, repose de niveau sur un panneau avant (4) et deux panneaux latéraux (3), et avec un élément antérieur (9) et deux éléments latéraux (10) qui forment un col (11) dépassant dans le couvercle rabattable (7), dans laquelle l'élément antérieur (9) est disposé parallèlement et à distance du panneau avant (4) et divise la coque (1) en un compartiment principal (12) et un compartiment antérieur (13), dans laquelle le compartiment principal (12) est séparé en deux compartiments de réception (15), en particulier de tailles différentes et la pièce découpée en carton (28) est séparée en une zone d'un élément latéral (10) et en une partie de l'élément antérieur (9) du col (11) de telle sorte que le compartiment principal (12) de la coque (1) soit subdivisé par une paroi de séparation (14) s'étendant de l'élément antérieur (9) vers le panneau arrière (5) dans les deux compartiments de réception (15) et dans l'un des compartiments de réception (15), un fond intermédiaire (17) est inséré, dans laquelle la pièce découpée en carton (28) présente pour la formation du fond intermédiaire (17) une languette (16) s'étendant du côté inférieur de l'élément latéral (10) articulé au panneau arrière (5) par une ligne de pliage (31).

2. Boîte pliante selon la revendication 1, **caractérisée en ce que** la languette (16) s'éloigne en un premier segment (39) de l'élément latéral (10), évolue en un deuxième segment (42) dans la direction du bord supérieur libre de l'élément latéral et est conduite en un troisième segment (66) vers l'élément latéral, dans laquelle le troisième segment (66) débouche sur un quatrième segment (44) évoluant parallèlement à l'élément latéral (10) et collé à celui-ci.

3. Boîte pliante selon la revendication 1, **caractérisée en ce que**, dans le compartiment antérieur (13) et/ou un compartiment de réception (15) du compartiment principal (12), une brochure d'information, en particulier une notice (19, 22), est insérée de manière à pouvoir être retirée.

4. Boîte pliante selon la revendication 3, **caractérisée en ce que** la brochure d'information est fixée de manière détachable dans le compartiment antérieur (13).

5. Boîte pliante selon la revendication 4, **caractérisée en ce que** la brochure d'information est poussée dans un bandeau (21) qui est collé sur le côté intérieur du panneau avant (4) ou le côté extérieur de l'élément antérieur (9) du col (11), en particulier déjà dans la pièce découpée en carton (28).

6. Boîte pliante selon la revendication 1, **caractérisée en ce que**, dans le compartiment de réception (15) du compartiment principal (12), un dispositif d'application, en particulier un inhalateur (18), pour une formulation de principe actif médical est utilisé et, dans l'autre compartiment de réception (15), au moins un emballage, en particulier une cartouche (20)de formulation de principe actif à appliquer., est utilisé(e).

7. Boîte pliante selon la revendication 1, **caractérisée en ce que** le couvercle rabattable (7) est relié, dans une ligne de pliage déchirable lors de la première ouverture du couvercle rabattable (7), avec les panneaux latéraux (3) et le panneau avant (4).
